# EUROPEAN PATENT SPECIFICATION

(11) **EP 3 564 399 B1**
(45) Date of publication and mention of the grant of the patent: **02.12.2020**
(21) Application number: 17887685.0
(22) Date of filing: 12.12.2017
(51) Int. Cl.: C22C 38/06, C22C 38/60, C21D 9/46, C22C 38/00, C22C 38/02, C22C 38/04, H01F 1/147, H01F 1/16, C21D 1/30, C21D 1/76, C21D 8/12, C21D 6/00

(54) **NON-ORIENTED ELECTRICAL STEEL SHEET HAVING AN EXCELLENT RECYCLABILITY**
NICHT-ORIENTIERTES ELEKTROMAGNETISCHES STAHLBLECH MIT HERVORRAGENDER WIEDERVERWERTUNG
FEUILLE D'ACIER ÉLECTROMAGNÉTIQUE NON ORIENTÉE AYANT UNE EXCELLENTE APTITUDE AU RECYCLAGE

(30) Priority: 28.12.2016 JP 2016254928; 28.03.2017 JP 2017062216
(43) Date of publication of application: 06.11.2019
(73) Proprietor: JFE Steel Corporation, Tokyo 100-0011 (JP)
(72) Inventor: OKUBO Tomoyuki, Tokyo 100-0011 (JP); UESAKA Masanori, Tokyo 100-0011 (JP); ODA Yoshihiko, Tokyo 100-0011 (JP)
(74) Representative: Grünecker Patent- und Rechtsanwälte PartG mbB
(86) International application number: PCT/JP2017/044518
(87) International publication number: WO 2018/123558

(56) References cited:
- EP-A1- 2 883 975
- EP-A1- 3 388 537
- CN-A- 1 370 850
- JP-A- S5 547 320
- JP-A- H03 219 020
- JP-A- 2004 339 537
- JP-A- 2004 339 537
- JP-A- 2012 149 337
- JP-A- 2013 044 010
- JP-A- 2013 082 973
- JP-A- 2013 104 080
- JP-A- 2015 206 092
- KR-A- 20150 015 308
- US-A- 4 439 251
- BELL S ET AL: "Final Report on Effect of Impurities in Steel", FINAL REPORT OF NATURAL RESOURCES CANADA, NATURAL RESOURCES CANADA, CANADA , vol. Report number: 2005-41(CF) 1 March 2006 (2006-03-01), pages 1-25, XP009508207, DOI: 10.13140/RG.2.2.33946.85440 Retrieved from the Internet: URL:https://www.researchgate.net/publicati on/306293969?channel=doi&linkId=57b7493708 aec9984ff2a51f&showFulltext=true

## Description

### TECHNICAL FIELD

This invention relates to a non-oriented electrical steel sheet and, more particularly, to a non-oriented electrical steel sheet having an excellent recyclability.

### RELATED ART

In recent years, promotion of recycling and energy saving have been demanded for the purpose of protecting the global environment. In the field of electrical equipment, similarly, it is demanded to increase a recycling rate and promote an efficiency thereof. To this end, it is strongly expected to develop materials having not only an excellent recyclability but also a low iron loss as non-oriented electrical steel sheets widely used as an iron core material for electrical equipment.

As a technique of improving the recyclability of the non-oriented electrical steel sheets, for example, Patent Document 1 proposes a method wherein not only magnetic properties but also recyclability are improved by decreasing the Al amount to a ultralow volume of less than 0.0005 mass% in non-oriented electrical steel sheets containing Si: 0.7-1.5 mass% and Mn: 0.1-0.3 mass%. JP 2013 082973 A, JP 2004 339537 A,EP 3 388 537 A1, US 4 439 251 A and JP S55 47320 A disclose non-oriented electrical steel sheets.

### PRIOR ART DOCUMENTS

### PATENT DOCUMENTS

Patent Document 1: JP-A-2004-277760

### SUMMARY OF THE INVENTION

### TASK TO BE SOLVED BY THE INVENTION

The method disclosed in Patent Document 1 is effective when Si and Mn contents in the raw steel material are low, but has a problem in the quality that it is difficult to sufficiently reduce the iron loss by stress-relief annealing in a short time when Si and Mn contents are high. The method also has a problem in the production that it is not easy to decrease and control Al content to less than 0.0005 mass%.

It is, therefore, an object of the invention to provide a non-oriented electrical steel sheet being excellent in not only recyclability but also iron loss property after stress-relief annealing.

### SOLUTION FOR TASK

The inventors have focused on trace components contained in a raw steel material having a low Al content to solve the above task, and made various studies on their influence on the iron loss property after stress-relief annealing. As a result, it has been found that not only the iron loss property after the stress-relief annealing is improved but also the Al content can be increased to 0.05 mass%, which is higher than Al: 0.0005 mass% disclosed in Patent Document 1, by adding an adequate amount of B, and further that the iron loss property after the stress-relief annealing is more improved when B and Ca and/or REM are compositely added, and consequently, the invention has been accomplished.

### EFFECT OF THE INVENTION

According to the invention, non-oriented electrical steel sheets being excellent in not only recyclability but also iron loss property after stress-relief annealing can be provided, so that it is possible to simultaneously attain the increase of recycling rate and energy saving.

### BRIEF DESCRIPTION OF DRAWINGS

FIG. 1 is a graph showing an addition effect of B and REM on an iron loss after finish annealing.
FIG. 2 is a graph showing an addition effect of B and REM on an iron loss after stress-relief annealing.

### EMBODIMENTS FOR CARRYING OUT THE INVENTION

There will be described an experiment that triggered the development of the invention below.

A steel containing relatively high Si and Mn and having a chemical composition comprising C: 0.002 mass%, Si: 2.5 mass%, Mn: 1.02 mass%, P: 0.02 mass%, Al: 0.001 mass%, S: 0.0021 mass%, N: 0.0028 mass%, O: 0.0045 mass%, Ti: 0.0012 mass%, Nb: 0.0005 mass%, B: 0.0001-0.0059 mass%, REM: 0.015 mass% or not more than 0.001 mass% and the remainder being Fe and inevitable impurities is melted in a laboratory and casted to form a steel ingot, which is hot-rolled to form a hot rolled sheet having a thickness of 2.0 mm. The hot rolled sheet is subjected to a hot band annealing at 980°C for 30 seconds, pickled and cold-rolled to form a cold rolled sheet having a thickness of 0.30 mm. The cold rolled sheet is then subjected to a finish annealing at a soaking temperature of 1000°C for a soaking time of 10 seconds.

An Epstein test specimen of 280 mm x 30 mm is cut out from the thus obtained steel sheet after the finish annealing both in a rolling direction (L-direction) and along a direction perpendicular to the rolling direction (C-direction), and an Epstein test thereof is conducted to measure magnetic properties (iron loss W_{15/50}).

Then, the Epstein test specimen subjected to the above magnetic measurement is further subjected to a heat treatment (heating rate: 300°C/hr, soaking temperature: 750°C, soaking time: 0 hr, and cooling rate: 100°C/hr) simulating a stress-relief annealing by users, and thereafter magnetic properties (iron loss W_{15/50}) is measured again.

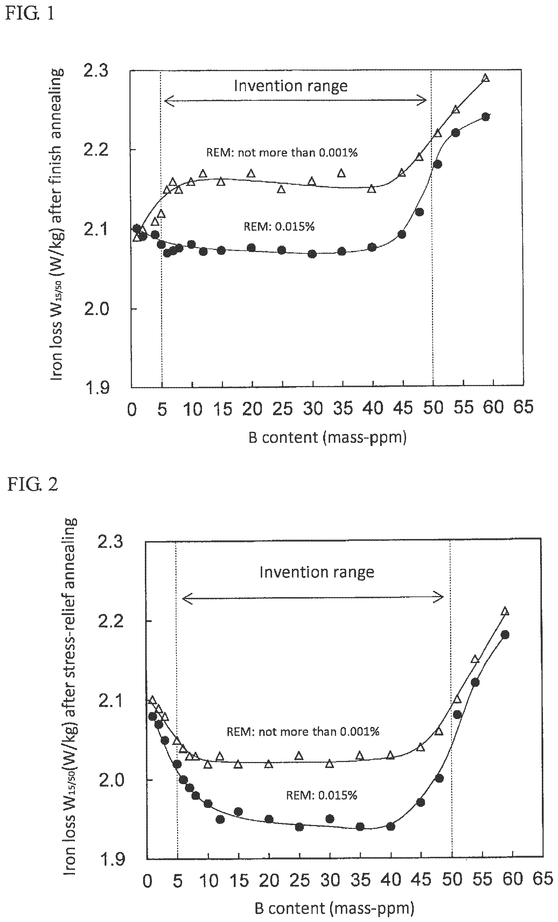

FIG. 1 shows a relationship between an iron loss W_{15/50} after the finish annealing (before stress-relief annealing) and B and REM contents. FIG. 2 shows a relationship between an iron loss W_{15/50} after stress-relief annealing and B and REM contents. As seen from FIG. 1, when an adequate amount of B is added, the iron loss after the finish annealing (before stress-relief annealing) is somewhat increased, but the iron loss after the stress-relief annealing can be reduced. Also, when REM is compositely added in addition to B, not only the iron loss after the finish annealing (before stress-relief annealing) can be reduced, but also the iron loss after the stress-relief annealing can be more reduced.

It is generally known that when the electrical steel sheet after punching is subjected to a stress-relief annealing, the iron loss is reduced because processing strain and the like are released. In the steel sheet having relatively high Si and Mn contents, however, the iron loss is hardly changed before and after the stress-relief annealing when B is not contained. On the contrary, it is confirmed that the iron loss is decreased by the stress-relief annealing when an adequate amount of B is added to the steel sheet, and further decreased to improve an iron loss property when REM is compositely added to the steel sheet.

The inventors have considered why such results are provides as follows.

In the steel sheet having relatively high Si and Mn contents and containing no B, Si-Mn nitrides are precipitated in the stress-relief annealing to block movement of magnetic domains, and hence the iron loss is increased. Thus, the effect of reducing the iron loss by the release of processing strain through the stress-relief annealing is set off by the increase of the iron loss through Si-Mn nitrides, whereby the effect of reducing the iron loss by the stress-relief annealing cannot be obtained.

On the other hand, when an adequate amount of B is added to the steel sheet, finely precipitated B nitrides (mainly BN) block grain growth in the finish annealing as an inhibitor, so that the iron loss after the finish annealing (before stress-relief annealing) is somewhat increased. However, N in steel is consumed by the formation of B nitride to suppress the precipitation of Si-Mn nitrides in the stress-relief annealing, and hence grain growth in the stress-relief annealing is promoted to reduce the iron loss after the stress-relief annealing.

Furthermore, when REM is compositely added in the steel sheet in addition to B, it is observed that BN is precipitated on a relatively coarse REM inclusion (sulfated substance). In the steel sheet compositely added with B and REM, therefore, finely dispersed and precipitated BN is suppressed to promote crystal grain growth in the finish annealing, so that the iron loss property after the finish annealing (before stress-relief annealing) is improved to a level as in a sheet containing no B. Also, the formation of Si-Mn nitrides is suppressed in the stress-relief annealing, so that the quantity of the iron loss reduced by the stress-relief annealing is more increased. That is, the iron loss after the finish annealing and after the stress-relief annealing can be largely reduced by compositely adding adequate amounts of B and REM.

Moreover, the effect of REM is recognized also in Ca, according to the inventors' research.

The invention is developed based on the above knowledge.

The chemical composition of the non-oriented electrical steel sheet according to the invention will be described below.

### C: not more than 0.0050 mass%

C is a harmful element forming a carbide to cause magnetic aging and deteriorate an iron loss property of a product sheet, so that an upper limit thereof is restricted to 0.0050 mass%. Preferably, it is not more than 0.0030 mass%. Moreover, the lower limit of C is not particularly restricted because a lower content is preferred.

### Si: 1.0-5.0 mass%

Si is an element having an effect of increasing a specific resistance of steel to reduce an iron loss. Since Si is a non-magnetic element, there is a problem that an addition of a large amount of Si causes the decrease of the magnetic flux density. In many cases, however, a motor efficiency is improved by the effect of reducing the iron loss, so that Si is positively added in the invention. Also, the invention is a technique of suppressing the block of grain growth due to precipitation of silicon nitride in stress-relief annealing. When Si is less than 1.0 mass%, the above bad influence is not remarkable, so that the effect of the invention is not developed. On the other hand, when the addition amount of Si exceeds 5.0 mass%, rolling becomes difficult. In the invention, therefore, Si amount falls within a range of 1.0-5.0 mass%. Preferably, it is 1.5-4.0 mass%. More preferably, it is 2.0-3.5 mass%.

### Mn: 0.3 - 2.0 mass%

Mn bonds to S to prevent hot brittleness due to S and has an effect of increasing a specific resistance of steel to reduce the iron loss. Since Mn is an element having a solid-solution strengthening amount smaller than that of Si, the specific resistance can be increased without damaging punchability of steel as compared to Si, so that it is positively added in the invention. In order to obtain the above effect, the addition of not less than 0.03 mass% is necessary. On the other hand, when it exceeds 3.0 mass%, an amount of Mn carbide precipitated is increased to block the gain growth and rather increase the iron loss. Therefore, Mn amount is in a range 0.3-2.0 mass%.

### [Mn]/[Si]: not less than 0.30

Si and Mn are elements forming nitride. When Si and Mn are compositely added, the formation of Si-Mn nitride is promoted in the stress-relief annealing. In particular, when a ratio [Mn]/[Si] of Mn content (mass%) to Si content (mass%) is not less than 0.20, Si-Mn nitride is liable to be easily produced, which blocks the grain growth and does not provide the effect of reducing the iron loss by stress-relief annealing. That is, when [Mn]/[Si] is not less than 0.20, the effect of the invention becomes remarkable. Therefore the technique of the invention is applied to non-oriented electrical steel sheets having the ratio [Mn]/[Si] of not less 0.30.

### P: not more than 0.2 mass%

Since P is high in the solid-solution strengthening ability, it can be appropriately added to adjust a strength (hardness) of steel. In order to obtain such an effect, the addition of not less than 0.04 mass% is preferable. However, when it exceeds 0.2 mass%, the rolling becomes difficult due to embrittlement of steel, so that an upper limit of P is 0.2 mass%. Preferably, it is not more than 0.10 mass%.

### Al: not more than 0.05 mass%

Al is a harmful element deteriorating a recyclability and is preferably decreased as far as possible. In particular, when it exceeds 0.05 mass%, the recycling becomes difficult. When Al is not more than 0.005 mass%, fine AlN is decreased to promote crystal grain growth, which is advantageous to reduce an iron loss of a product sheet. In the invention, however, N is fixed as a B nitride (mainly BN), so that even when Al is added up to 0.05 mass%, the fine AlN is hardly produced and a bad influence upon the grain growth is small. Therefore, the upper limit of Al in the invention is 0.05 mass%. Preferably, it is not more than 0.02 mass%.

### N: not more than 0.0050 mass%

N is a harmful element forming a nitride with Si and/or Mn to block the grain growth and increase the iron loss. Such a bad influence becomes remarkable when it exceeds 0.0050 mass%, so that an upper limit of N is 0.0050 mass%. It is preferably not more than 0.003 mass%.

### S: not more than 0.005 mass%

S is an element forming a sulfide to block the grain growth and increase the iron loss. In particular, when it exceeds 0.005 mass%, the above bad influence becomes remarkable, so that the upper limit is 0.005 mass%. Preferably, it is not more than 0.003 mass%.

### O: not more than 0.010 mass%

O is an element forming an oxide to block the grain growth and increase the iron loss. In particular, when it exceeds 0.010 mass%, the above bad influence becomes remarkable, so that the upper limit is 0.010 mass%. Preferably, it is not more than 0.005 mass%.

### Ti: not more than 0.0030 mass%, Nb: not more than 0.0030 mass%

Ti and Nb are elements bonding to C in steel to deteriorate recrystallization texture and decrease a magnetic flux density of a product sheet. When either of them exceeds 0.0030 mass%, the above bad influence becomes remarkable, so that each upper limit is 0.0030 mass%. Preferably, it is not more than 0.0015 mass%.

### B: 0.0005-0.0050 mass%

B forms a stable nitride to suppress the formation of Si-Mn nitride in stress-relief annealing and has an effect of reducing the iron loss after the stress-relief annealing, so that it is an important element in the invention. When it is less than 0.0005 mass%, the above effect is small, while when it exceeds 0.0050 mass%, the grain growth is blocked to deteriorate the iron loss property. Therefore, B falls within a range of 0.0005-0.0050 mass%. The lower limit of B is preferably not less than 0.0010 mass%, more preferably not less than 0.0020 mass% from a viewpoint of the reduction of the iron loss after the stress-relief annealing.

Moreover, there is a tendency that B nitride is easily precipitated on the oxide of Ca and/or REM as previously described, it is advantageous that B is compositely added together with Ca and/or REM in order to enhance the effect of reducing the iron loss by B.

The non-oriented electrical steel sheet according to the invention can contain Ca, REM, Sn and Sb within the following ranges in addition to the above basic ingredients.

### Ca: 0.0010-0.010 mass%, REM: 0.0010-0.040 mass%

Both Ca and REM have an effect of suppressing the increase of the iron loss due to B by compositely adding together with B. In order to obtain such an effect, it is preferable to add each element in an amount of not less than 0.0010 mass%. However, when Ca is added in an amount exceeding 0.010 mass% and/or REM is added in an amount exceeding 0.040 mass%, the effect of improving the iron loss property is saturated and inclusions block magnetic domain wall displacement to rather increase the iron loss. Therefore, when Ca and/or REM are added, it is preferable that Ca is in a range of 0.0010-0.010 mass% and REM is in a range of 0.0010-0.040 mass%. More preferably, Ca is in a range of 0.0020-0.0050 mass% and REM is in a range of 0.0040-0.020 mass%.

### Sn and Sb: 0.005-0.20 mass% in total

Sn and Sb have an effect of improving recrystallization texture to improve the magnetic flux density and iron loss. In order to obtain such an effect, it is necessary that these elements are added in an amount of not less than 0.005 mass% in total. On the other hand, when they are added in an amount exceeding 0.20 mass%, the above effect is saturated. Therefore, when Sn and/or Sb are added, it is preferable that they are added within a range of 0.005-0.20 mass% in total. More preferably, the total amount is in a range of 0.01-0.10 mass%.

### Mg: 0.0002-0.0050 mass%

Mg has an effect of improving the iron loss property by forming a stable sulfide up to a higher temperature to suppress the formation of fine sulfide and promote the grain growth. In order to obtain such an effect, the addition amount is necessary to be not less than 0.0002 mass%. On the other hand, when the addition amount exceeds 0.0050 mass%, the iron loss property is rather deteriorated. Therefore, when Mg is added, the amount is preferable to be in a range of 0.0002-0.0050 mass%. More preferably, it is in a range of 0.0004-0.0020 mass%.

In the non-oriented electrical steel sheet according to the invention, the remainder other than the above ingredients is Fe and inevitable impurities.

The production method of the non-oriented electrical steel sheet according to the invention will be described below.

The non-oriented electrical steel sheet according to the invention can be produced by melting a steel having the above chemical composition adapted to the invention through a conventionally well-known refining process with a convertor, an electric furnace, a vacuum degassing device or the like, shaping a molted mass into a steel slab through a continuous casting method or an ingot-making/blooming method, hot-rolling the steel slab through a well-known process to form a hot rolled sheet, subjecting the hot rolled sheet to a hot band annealing if necessary, then subjecting the hot rolled sheet to single cold-rolling or two or more cold rollings interposing an intermediate annealing therebetween to form a cold rolled sheet having a final thickness, and subjecting the cold rolled sheet to a finish annealing.

Here, the hot band annealing is preferable to be conducted because it is effective for the improvement of the magnetic properties though production cost is increased.

Also, the temperature of the finish annealing after the cold rolling is desirably adjusted in accordance with target values of the magnetic properties and mechanical properties and is preferable to be not lower than 900°C from a viewpoint that the grain growth is promoted to reduce the iron loss. More preferably, it is in a range of 950-1050°C. Furthermore, an annealing atmosphere in the finish annealing is preferable to be a reducing atmosphere such as hydrogen-nitrogen mixed atmosphere having P_{H2O}/P_{H2} of not more than 0.1, more preferably a hydrogen-nitrogen mixed atmosphere having P_{H2O}/P_{H2} of not more than 0.01.

The steel sheet after the finish annealing is preferable to be coated on its surface with an insulating film in order to ensure insulation properties in lamination and/or improve a punchability. The insulating film is preferably an organic film containing a resin to ensure a good punchability. Also, it is preferably a semi-organic or inorganic film when a weldability is regarded as important.

The thus obtained non-oriented electrical steel sheet according to the invention is excellent in not only the recyclability but also the iron loss property after the stress-relief annealing, so that it is punched out into a core form for a rotor and a stator and laminated to form a motor core, which can be used in applications subjected to stress-relief annealing. The stress-relief annealing is preferably conducted in an inert gas atmosphere under a condition at 700-900°C for 0.1-10 hr. When the annealing temperature is lower than 700°C and/or the soaking time is less than 0.1 hour, the grain growth is insufficient and the effect of reducing the iron loss through the stress-relief annealing cannot be obtained sufficiently, while when the annealing temperature exceeds 900°C, sticking of the insulating film cannot be prevented, and hence it is difficult to ensure the insulation properties between the steel sheets and the iron loss is increased. Also, when the soaking time exceeds 10 hour, the productivity is lowered to increase the production cost. A more preferable condition is at 720-820°C for 1-3 hr.

### EXAMPLE

Each of steels having various chemical compositions shown in Table 1 is melted and shaped into a steel slab. The steel slab is heated at 1100°C for 30 minutes and subjected to a hot rolling with an end temperature of the final rolling of 900°C to form a hot rolled sheet having a thickness of 2.3 mm, which is wound into a coil at a coiling temperature of 580°C. Then, the hot rolled sheet is pickled for descaling and cold-rolled to form a cold rolled sheet having a thickness of 0.35 mm. The cold rolled sheet is subjected to a finish annealing in an atmosphere of H₂:N₂ = 20:80 (P_{H2O}/P_{H2}: 0.001) at 1000°C for 10 seconds and coated with an insulating film to obtain a non-oriented electrical steel sheet (product sheet).

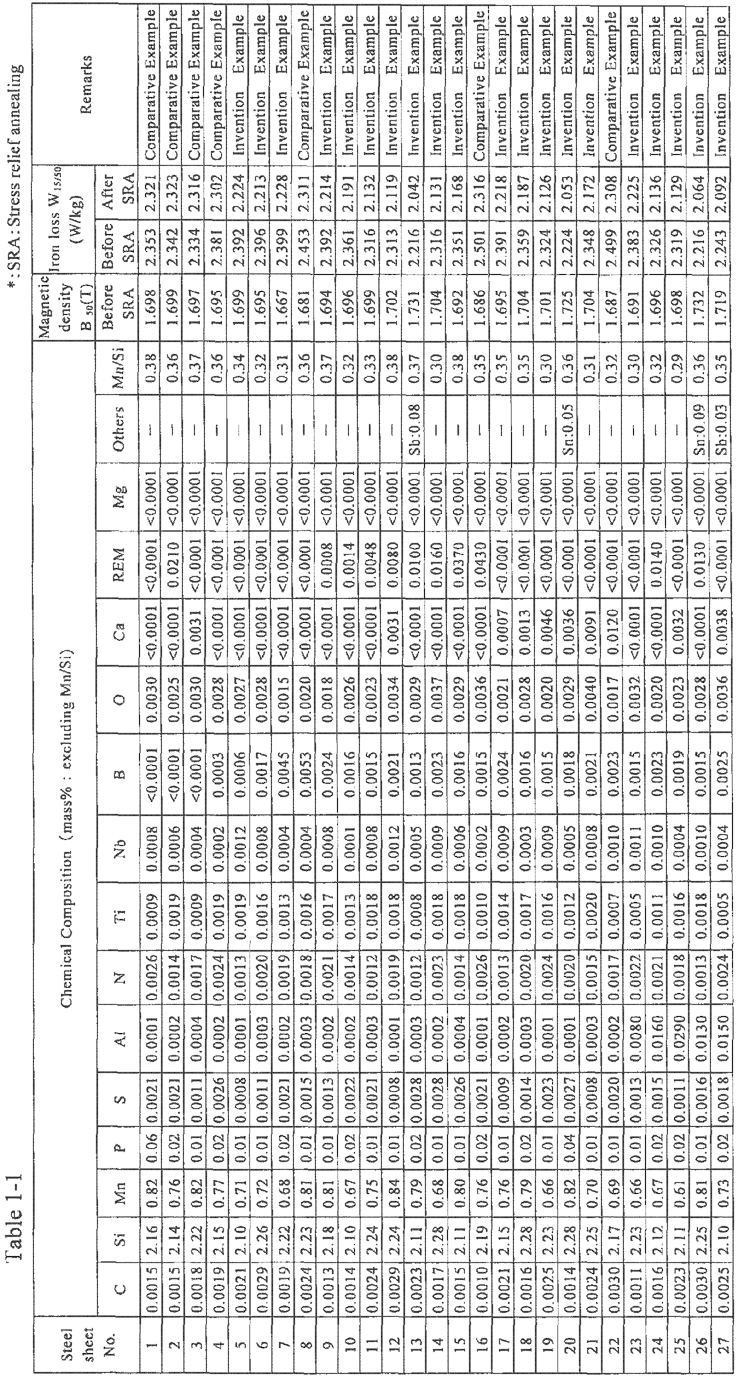

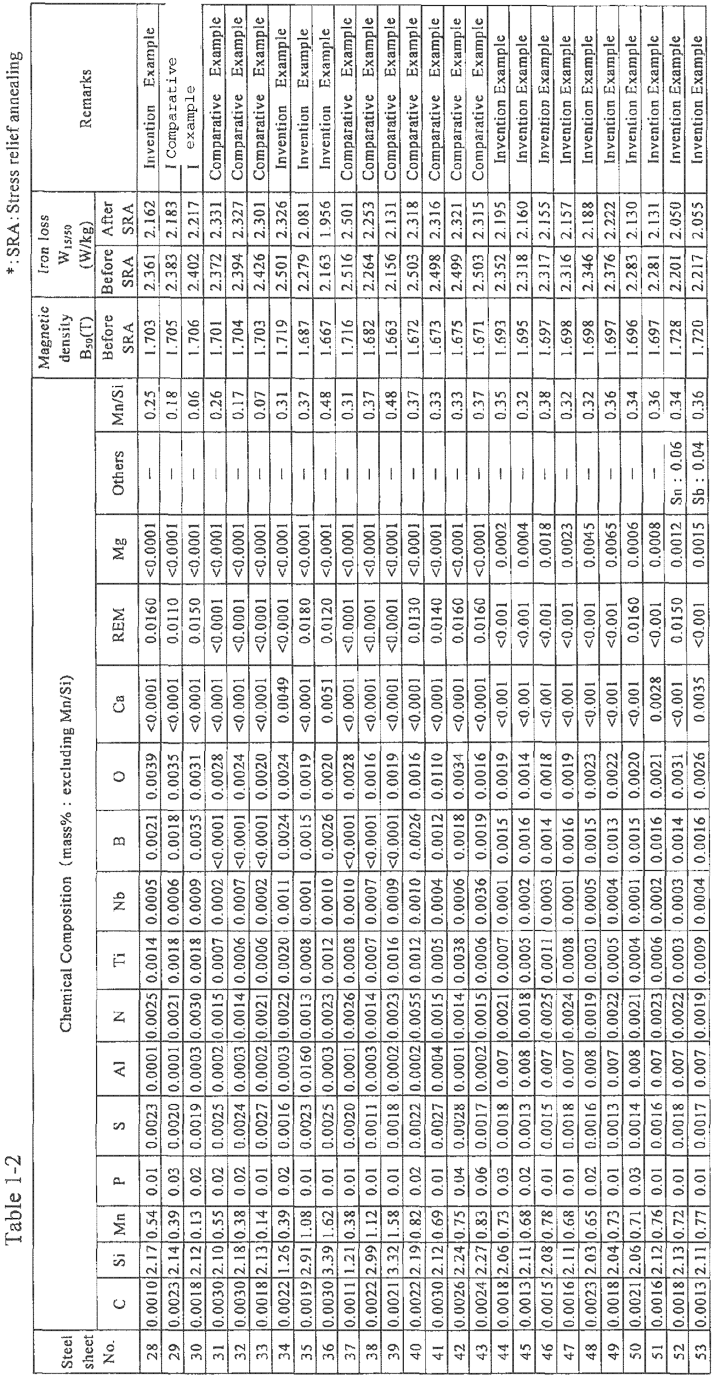

From the thus obtained product sheet are taken out Epstein test specimens of 280 mm x 30 mm in a rolling direction and along a direction perpendicular to the rolling direction, which are subjected to an Epstein test to measure an iron loss W_{15/50} and a magnetic flux density B₅₀.

Then, the Epstein test specimens after the measurement of the iron loss are subjected to a heat treatment (heating rate: 300°C/hr, soaking temperature: 750°C, soaking time: 0 hr, cooling rate: 100°C/hr) simulating a stress-relief annealing SRA by user, and thereafter the iron loss W_{15/50} and magnetic flux density B₅₀ are measured again.

The above measured results are also shown in Table 1. The records of the magnetic flux density after the stress-relief annealing are omitted because they are approximately equal to those after the finish annealing. As seen from this table, the steel sheets having a chemical composition adapted to the invention are excellent in the iron loss property after the stress-relief annealing even when Si and Mn contents are relatively high.

## Claims

1. A non-oriented electrical steel sheet having a chemical composition comprising C: not more than 0.0050 mass%, Si: 1.0-5.0 mass%, Mn: 0.3-2.0 mass%, P: not more than 0.2 mass%, S: not more than 0.005 mass%, Al: not more than 0.05 mass%, N: not more than 0.0050 mass%, O: not more than 0.010 mass%, Ti: not more than 0.0030 mass%, Nb: not more than 0.0030 mass%, B: 0.0005-0.0050 mass%, optionally one, or two or more selected from Ca: 0.0010-0.010 mass%, REM: 0.0010-0.040 mass%, 0.005-0.20 mass% in total of Sn and Sb and Mg: 0.0002-0.0050 mass%, and the remainder being Fe and inevitable impurities, and wherein a ratio [Mn]/[Si] of Mn content in mass% to Si content in mass% is not less than 0.30.

## Patentansprüche

1. Nicht-orientiertes Elektrostahlblech mit einer chemischen Zusammensetzung umfassend C: nicht mehr als 0,0050 Masse-%, Si: 1,0 - 5,0 Masse-%, Mn; 0,3 - 2,0 Masse-%, P: nicht mehr als 0,2 Masse-%, S: nicht mehr als 0,005 Masse-%, Al: nicht mehr als 0,05 Masse-%, N: nicht mehr als 0,0050 Masse-%, O: nicht mehr als 0,010 Masse-%, Ti: nicht mehr als 0,0030 Masse-%, Nb: nicht mehr als 0,0030 Masse-%, B: 0,0005 - 0,0050 Masse-%, optional ein oder zwei oder mehr ausgewählt aus Ca: 0,0010 - 0,010 Masse-%, REM: 0,0010 - 0,040 Masse-%, insgesamt 0,005 - 0,20 Masse-% Sn und Sb und Mg: 0,0002 - 0,0050 Masse-%, wobei der Rest Fe und unvermeidbare Verunreinigungen sind und wobei ein Verhältnis [Mn] / [Si] des Mn-Gehalts in Masse-% zum Si-Gehalt in Masse-% nicht weniger als 0,30 beträgt.

## Revendications

1. Tôle d'acier électrique non orientée ayant une composition chimique comprenant C : pas plus de 0,0050 % en masse, Si : de 1,0 à 5,0 % en masse, Mn : de 0,3 à 2,0 % en masse, P : pas plus de 0,2 % en masse, S : pas plus de 0,005 % en masse, Al : pas plus de 0,05 % en masse, N : pas plus de 0,0050 % en masse, O : pas plus de 0,010 % en masse, Ti : pas plus de 0,0030 % en masse, Nb : pas plus de 0,0030 % en masse, B : de 0,0005 à 0,0050 % en masse, éventuellement un ou deux éléments ou plus choisis parmi Ca : de 0,0010 à 0,010 % en masse, terres rares : de 0,0010 à 0,040 % en masse, 0,005 à 0,20 % en masse au total de Sn et Sb et Mg : de 0,0002 à 0,0050 % en masse, le reste étant du Fe et des impuretés inévitables, et un rapport [Mn]/[Si] de la teneur en Mn (en % massique) à la teneur en Si (en % massique) n'étant pas inférieur à 0,30.
